Europäisches Patentamt

European Patent Office

Office européen des brevets

(11) Veröffentlichungsnummer: **0 646 445 A1**

## (12) EUROPÄISCHE PATENTANMELDUNG

(21) Anmeldenummer: **94115083.1**

(22) Anmeldetag: **24.09.94**

(51) Int. Cl.⁶: **B29B 17/00**, B29B 13/10, B29B 13/02, B02C 18/44, //B29K25:00,B29K105:04

(30) Priorität: **05.10.93 DE 4333876**

(43) Veröffentlichungstag der Anmeldung: **05.04.95 Patentblatt 95/14**

(84) Benannte Vertragsstaaten: **CH DE ES FR GB IT LI**

(71) Anmelder: **GEBRÜDER LÖDIGE MASCHINENBAU GMBH Elsener Strasse 5-7 D-33102 Paderborn (DE)**

(72) Erfinder: **Hullmann, H.D. Haferbusch 50 D-51467 Bergisch-Gladbach (DE)** Erfinder: **Schär, Ulrich Elser Kirchstrasse 27 D-33106 Paderborn (DE)**

(74) Vertreter: **KOHLER SCHMID + PARTNER Patentanwälte Ruppmannstrasse 27 D-70565 Stuttgart (DE)**

(54) **Verfahren für Altteile bzw. Abfälle aus Kunststoff, insbesondere aus aufgeschäumtem Kunststoff.**

(57) Altteile bzw. Abfälle aus Kunststoff, insbesondere aus aufgeschäumtem Polystyrol, werden in einem Wiederaufbereitungsverfahren in einer Vorrichtung gleichzeitig gezielt unter Friktion, Scherkräften und Temperatureinwirkung zerkleinert und verdichtet sowie temperiert und/oder getrocknet und/oder entgast. Das in der Vorrichtung (1), einem Misch-Recycler, behandelte Gut verläßt als stark kompaktiertes rieselfähiges Granulat die Vorrichtung und das behandelte Gut weist ein mehrfach erhöhtes Schüttgewicht gegenüber dem unbehandelten Ausgangsprodukt auf. Das rieselfähig kompaktierte Granulat ist für die Weiterverarbeitung gut geeignet, weil es unter geringer thermischer Belastung hergestellt wurde.

Fig.1

EP 0 646 445 A1

Das Recyclingverfahren betrifft die Vorbehandlung von Altteilen bzw. Abfällen aus aufgeschäumtem Kunststoff, insbesondere aus aufgeschäumtem Polystyrol, mittels mechanischem Zerkleinern und thermomechanischer Beanspruchung, wobei die Verfahrensstufen zusammengefaßt durch gezielte Einwirkung von Friktion, Scherkräften und Temperatur auf das Gut in einer Vorrichtung erfolgen und das zu behandelnde Gut durch Werkzeuge zerteilt, verdichtet, temperiert und/oder entgast, untereinander zu einem homogenen rieselfähigen Granulat verarbeitet wird. Weiterhin betrifft die Erfindung eine Vorrichtung zur Wiederaufarbeitung von aufgeschäumtem Polystyrol unter Erhöhung des Schüttgewichts.

Ein Verfahren und Vorrichtungskomponenten zur Verwendung von Abfällen oder Altartikeln aus vernetztem Kunststoff, insbesondere aus Polyurethan oder Polyharnstoff, ist durch die europäische Patentanmeldung mit der Veröffentlichungsnummer 0 442 435 A2 bekanntgeworden und durch die DD 141 133 ist eine Vorrichtung zur Herstellung von Agglomerat aus Kunststoffabfällen bekannt.

Allgemein ist eine Vorbehandlung von aufgeschäumtem Polystyrol durch Zermahlen der Abfälle zu Stücken, deren Schüttgewicht jedoch dabei unverändert bleibt, bekannt. Die Mühle heizt die Abfälle nicht auf und entgast sie auch nicht. Bei weiteren bekannten Verfahren wird zwar das Schüttgewicht des zu verarbeitenden Gutes erhöht, aber die Abfälle werden aufgeschmolzen, wodurch das Material überaus thermisch belastet wird und sich nicht mehr zu Qualitätsprodukten wiederverwerten läßt.

Aus der EP 0 442 435 A2 ist ein Recyclingverfahren bekanntgeworden, nach dem in mehreren Verfahrensstufen nacheinander und in verschiedenen Vorrichtungen Altteile bzw. Abfälle aus Kunststoff, insbesondere aus Polyurethanschaum, verkleinert und weiterverarbeitet werden. Bei dem bekannten Recyclingverfahren hängen durch die Kombination verschiedener Vorrichtungen auch deren Verfahrensstufen voneinander ab und die Abfälle lassen sich deshalb nicht ohne weiteres am Ort des Anfalls aufarbeiten. Das bekannte Verfahren ist in vier Verfahrensstufen unterteilt, wobei in der ersten Verfahrensstufe eine Zerkleinerung der Abfälle stattfindet und in der zweiten Verfahrensstufe wird das zu behandelnde Gut in einem Kneter auf bis zu ca. T = 200° C erwärmt. Danach wird das derart bearbeitete Gut abgekühlt. Für die zweite Verfahrensstufe wird zweckmäßigerweise ein Druckkneter eingesetzt, dessen Verfahrensdruck zwischen 2 und 10 bar liegt. In der dritten Verfahrensstufe wird das Gut innerhalb eines Kaltkneters vernetzt und in einer vierten Verfahrensstufe wird das in den vorangegangenen drei Verfahrensstufe behandelte Gut abgekühlt.

Nach einem weiteren aus DE 38 30 118 A1 bekannten Verfahren werden Schaumstoffkunststoffabfälle, insbesondere Schaumstoffisolierabfälle, von zu verschrottenden Kühlschränken oder dgl. Geräten, entgast und volumenreduziert. Die Abfälle werden zwischen zwei relativ zueinander verstellbaren Begrenzungswänden einer verschließbaren Kammer eingebracht. Die Kammer wird danach geschlossen und unter Druck gesetzt. Die zu bearbeitenden Abfälle werden mechanisch zusammengepreßt und die dabei entweichenden Gase werden aus der Kammer abgesaugt und außerhalb der Kammer verflüssigt. Die entgasten und zusammengepreßten Abfälle werden anschließend aus der Kammer entfernt.

DD 141 133 beschreibt eine Vorrichtung zur Herstellung von Agglomerat aus Kunststoffabfällen, die insbesondere zur Aufbereitung von Folie-, Faser- und Schaumstoffabfällen geeignet ist. Die Vorrichtung ermöglicht eine kontinuierliche, thermisch schonende Arbeitsweise, wobei ein für die unmittelbare Weiterverarbeitung geeignetes Agglomerat hoher Schüttdichtequalität erzeugt wird. Die Vorrichtung weist einen zylindrischen Behälter mit einem oder mehreren übereinander angeordneten Agglomerierflügeln auf. An den außenliegenden Seiten eines jeden Agglomerierflügels sind zwei kurvenförmig verlaufende, die aktiven Flanken bildende Flächen vorgesehen und zwischen der aktiven Flanke und der Behälterinnenwand befindet sich ein in einen Spalt auslaufender Verdichtungsbereich, in dem die Kunststoffabfälle in Agglomerat überführt werden.

Der Erfindung liegt die Aufgabe zugrunde, unter Vermeidung der bekannten Probleme bereits an den Erfassungsstellen der Altteile bzw. der Abfälle ein einfacheres Recyclingverfahren zu entwickeln, das die Qualität des zu bearbeitenden Materials im wesentlichen unverändert läßt und einen kostengünstigen Transport zu jedem Weiterverarbeiter zuläßt. Weiter besteht die Aufgabe darin, eine für das Verfahren geeignete Vorrichtung zu schaffen.

Diese Aufgabe wird erfindungsgemäß einerseits dadurch gelöst, daß die Mischwerkzeuge im Froudezahlbereich FR > 6 arbeiten, daß das Gut auf Temperaturen zwischen 100° C und 140° C erwärmt wird und daß das Schüttgewicht des erhaltenen Guts mehrfach höher als das Schüttgewicht der Abfälle ist.

Andererseits wird die Aufgabe bezüglich der Vorrichtung dadurch gelöst, daß die Vorrichtung einen Behälter mit Boden und Deckel aufweist, in der ein Mischwerk bestehend aus einer Welle und Mischwerkzeugen antreibbar gelagert ist, und daß der Behälter mit Produktein- und Produktaustragstutzen versehen ist.

Die mit dem Recyclingverfahren nach der Erfindung erzielbaren Vorteile bestehen vor allem darin, daß das Recyclingverfahren unabhängig von Wiederverwertungsanlagen für Altstoffe bzw. Abfälle gleich am Ort der Erfassung der Abfälle durchführbar ist, und daß der Transport zum Verarbeiter sehr wirtschaftlich wird. Dieses Ziel wird durch die Erhöhung des Schüttgewichts des zu verarbeitenden Guts erreicht. Die mit dem erfindungsgemäßen Recyclingverfahren aufgearbeiteten Verpackungsabfälle werden nicht wesentlich geschädigt und ergeben eine gute Produktqualität in der Wiederverarbeitung, weil das erfindungsgemäß behandelte Gut bei der Aufarbeitung nicht wesentlich thermisch belastet wurde und ist (T max. = 140°C). Das erzeugte Granulat mit erhöhtem Schüttgewicht ist später in jedem Extruder einfachst wiederverarbeitbar, weil das nach dem Verfahren hergestellte Gut gut rieselfähig ist. Durch die Unabhängigkeit dieses Recyclingverfahrens von der nachfolgenden Wiederverwertung erfolgt keine Begrenzung der Verarbeitungsgeschwindigkeiten durch vor- und/oder nachfolgende Vorrichtungen, wie beispielsweise einem Extruder.

In einer Weiterbildung der Erfindung wird die Mischvorrichtung kontinuierlich betrieben. Dies ermöglicht große Durchsatzleistungen und die für das erfindungsgemäße Verfahren notwendige Vorrichtung kann in kleinen Größen gebaut werden.

Weiterhin wird in einer bevorzugten Handhabung des Verfahrens das Gut in der Mischvorrichtung zu einem Granulat mit einer Korngrößenverteilung von 0,2 bis 3 mm aufbereitet.

Dies hat den Vorteil, daß ein derartiges Haufwerk gut rieselfähig ist und in bekannten Behältnissen transportiert und aber auch ohne wesentliche Brückenbildung aus diesen Behältnissen entleert werden kann. Bekannte Dosiereinrichtungen können bei der Weiterverarbeitung des erfindungsgemäß hergestellten Granulats eingesetzt werden.

In einer weiteren Ausgestaltung des Verfahrens wird als Gut ein aufgeschäumtes Polystyrol mit einem Schüttgewicht von ca. 20 Gramm pro Liter verwendet und das Polystyrol verläßt in Granulatform die Mischvorrichtung mit einem Schüttgewicht bis 250 Gramm pro Liter.

Durch eine derartige Verdichtung kann das ansonsten sehr voluminöse Ausgangsmaterial in eine Form gebracht werden, in der es wirtschaftlich handhabbar transportier- und weiterverarbeitbar ist.

Durch gezielt ausgewählte Parameter wie Temperatur, Zeit usw. können beliebige Schüttgewichte zwischen den angegebenen Grenzwerten erzeugt werden.

In einer weiteren Ausgestaltung des Verfahrens wird bei der Behandlung des Guts Gas freigesetzt, das zur Wiederverarbeitung aufgefangen bzw. verflüssigt wird. Dies hat den Vorteil, daß neben einer hochwertigen Aufarbeitung von Kunststoffaltteilen weitere bei einem erfindungsgemäßen Verfahren entstehende Wertstoffe gewonnen werden können. Dies steigert die Wirtschaftlichkeit des erfindungsgemäßen Verfahrens.

Ein weiterer bevorzugter Verfahrensschritt besteht darin, daß der Mischvorrichtung neben dem Gut eine Flüssigkeit mit einer Siedetemperatur von T > 100°C zugeführt wird, wobei das bearbeitete Gut von der Flüssigkeit gebunden wird.

Dies hat den Vorteil, daß man das rieselfähige Granulat noch innerhalb der Vorrichtung in eine fließfähige Paste überführen kann, die eine grießförmige, homogene Struktur aufweist. Eine derartige Masse ist, wie auch das rieselfähige Granulat, als Brennstoff für Heizanlagen jedweder Art geeignet.

Das rieselfähige Granulat weist einen guten Brennwert auf, und wird als zugesetzte Flüssigkeit Öl gewählt, so erhöht sich der Brennwert der fließfähigen Paste gegenüber dem rieselfähigen Granulat nochmals erheblich. Die überschüssige Flüssigkeit, beispielsweise ein geeignetes Öl, kann im Bereich des Produktauslaufs abgeschieden werden. Dieser Flüssigkeitsanteil kann dem Verfahren im Kreislauf im Bereich des Produkteintrags wieder zugeführt werden.

Für die Durchführung des Verfahrens wird eine Vorrichtung eingesetzt, die einen vertikal angeordneten Behälter aufweist, in dem rotierende Bearbeitungswerkzeuge, bestehend aus einer Welle und Mischwerkzeugen, antreibbar gelagert sind. Der Behälter ist mit einem Boden und einem Deckel versehen, wobei die Welle den Boden durchdringt, und am Deckel sind verschiedene Stutzen vorgesehen.

Mit einer derartigen Vorrichtung läßt sich das voluminöse Gut einfach ohne Schädigung verkleinern und beim Durchlauf durch die Vorrichtung wird das in ein rieselfähiges Granulat aufgeschlossene Gut auf Temperaturen bis zu T = 130°C erwärmt. Die bevorzugte Guttemperatur während des Bearbeitungsverfahrens liegt zwischen T = 110°C und T = 120°C.

Das Polystyrol wird dabei entgast und so stark verdichtet, daß eine erhebliche Schüttgewichtserhöhung erfolgt. Durch die Schüttgewichtserhöhung läßt sich das aufgearbeitete Gut in kleinen Behältern zum Weiterverarbeiter abtransportieren.

In einer bevorzugten Ausgestaltung der Vorrichtung ist der Behälter beheizbar. Dies ist dann vorteilhaft, wenn beispielsweise eine bessere Entgasung dann erfolgt, wenn das zu bearbeitende Gut stärker erwärmt wird und die Friktionswärme für eine gezielte Temperaturerhöhung des Guts nicht ausreichend ist. Der Behälter ist dafür bevorzugt mit einer Ummantelung versehen, durch die ein erwärm- bzw. kühlbares Fluid strömen kann. Es versteht sich, daß über eine derartige Ummantelung ein im Behälter befindliches Produkt auch gekühlt werden kann.

In einer weiteren Ausgestaltung der für dieses Verfahren eingesetzten Vorrichtung sind im Deckelbereich Entgasungsstutzen vorgesehen. Über die Entgasungsstutzen wir das bei der Verarbeitung freigesetzte Gas aus der Vorrichtung abgeführt und die weitere Verdichtung des zu bearbeitenden Gutes kann ohne weitere Einschränkungen gleichzeitig erfolgen.

In einer bevorzugten Ausgestaltung der Vorrichtung ist am Behälter mindestens ein Flüssigkeitszugabestutzen vorgesehen. Über den Flüssigkeitszugabestutzen kann eine Flüssigkeit in den Behälter eingebracht werden, über die das zu bearbeitende Produkt deshalb besser entgast werden kann, weil diese Flüssigkeit besonders einfach auf den Entgasungspunkt erwärmt werden kann. Es ist möglich, schon eine vorgewärmte Flüssigkeit in den Behälter einzugeben.

In weiterer Ausgestaltung der Vorrichtung ist an den Produktaustragstutzen eine Schnecke bzw. eine Pumpe anflanschbar. Über die Schnecke bzw. die Pumpe wird das bearbeitete Gut kontinuierlich aus dem Behälter ausgetragen.

Die Vorrichtung verfügt bei Bedarf über Mittel zur Steuerung und Regelung des Produkt- und/oder Flüssigkeitseintrags und des Produktaustrags. Über die an sich bekannten Mittel ist eine optimale Betriebsweise der Vorrichtung und die Handhabung des erfindungsgemäßen Verfahrens möglich.

Mit dem für das erfindungsgemäße Recyclingverfahren eingesetzten Mischer ist es erstmalig möglich, eine wirtschaftliche Wiederverwertung von Polystyrolabfällen, insbesondere von Verpackungsabfällen, zu ermöglichen. Dabei werden die Polystyrolabfälle nicht wesentlich geschädigt, so daß sie für eine hochwertige Weiterverarbeitung geeignet sind. Das am Produktausgang der Vorrichtung ausgetragene Granulat weist eine hochwertigere Qualität auf als die aus bekannten Recyclingverfahren stammenden Materialien.

An den Erfassungsstellen von Altteilen bzw. Abfällen aus Kunststoff, insbesondere aus aufgeschäumtem Polystyrol, wird zur Durchführung des Recyclingverfahrens eine Misch-Recycler-Vorrichtung kleiner oder mittlerer Bauart entsprechend dem Aufkommen der aufzubereitenden Abfälle stationiert. Die in die Vorrichtung eingebrachten Abfälle werden innerhalb sehr kurzer Verweilzeiten, die im Bereich von einer Minute bis zehn Minuten liegen, durch Einwirkung von Friktion, Scherkräften und Temperatur von einem ursprünglichen Schüttgewicht von ca. 20 Gramm pro Liter bis auf ca. 250 Gramm pro Liter erhöht. Die Altteile bzw. Abfälle werden von den Mischwerkzeugen zerteilt, gleichzeitig ohne Aufschmelzen temperiert, bei Bedarf dabei getrocknet und/oder entgast und untereinander zu einem homogenen rieselfähigen Granulat einer Korngrößenverteilung zwischen 0,2 und 3 mm gemischt. Die so behandelten Altteile bzw. Abfälle sind thermisch unbelastet und können zu Güter sehr guter Qualität weiterverarbeitet werden. Durch die mit dem Verfahren erfolgte Erhöhung des Schüttgewichts auf mehr als das zehnfache des Ausgangsproduktes ist ein wirtschaftlicher Transport zu jedem Weiterverarbeitungsbetrieb möglich. Im kontinuierlichen Verfahrensbetrieb sind hohe Durchsatzleistungen der zu verarbeitenden Abfälle erreichbar.

Weitere Vorteile ergeben sich aus der Beschreibung und der beigefügten Zeichnung. Ebenso können die vorstehend genannten und die noch weiter aufgeführten Merkmale erfindungsgemäß jeweils einzeln oder in beliebigen Kombinationen miteinander verwendet werden. Die erwähnten Ausführungsformen sind nicht als abschließende Aufzählung zu verstehen, sondern haben vielmehr beispielhaften Charakter.

Die Erfindung ist, soweit es die verwendete Vorrichtung betrifft, in der Zeichnung dargestellt und wird anhand von Ausführungsbeispielen näher erläutert.

Es zeigt:

Fig. 1      eine Gesamtansicht einer für das erfindungsgemäße Verfahren eingesetzten Vorrichtung;

Fig. 2      einen Schnitt durch den Behälter der Vorrichtung.

Die Figuren der Zeichnung zeigen den erfindungsgemäßen Aufbau der verwendeten Vorrichtung und die einzelnen gegenständlich gezeigten Merkmale teilweise stark schematisiert und sind nicht maßstäblich zu verstehen.

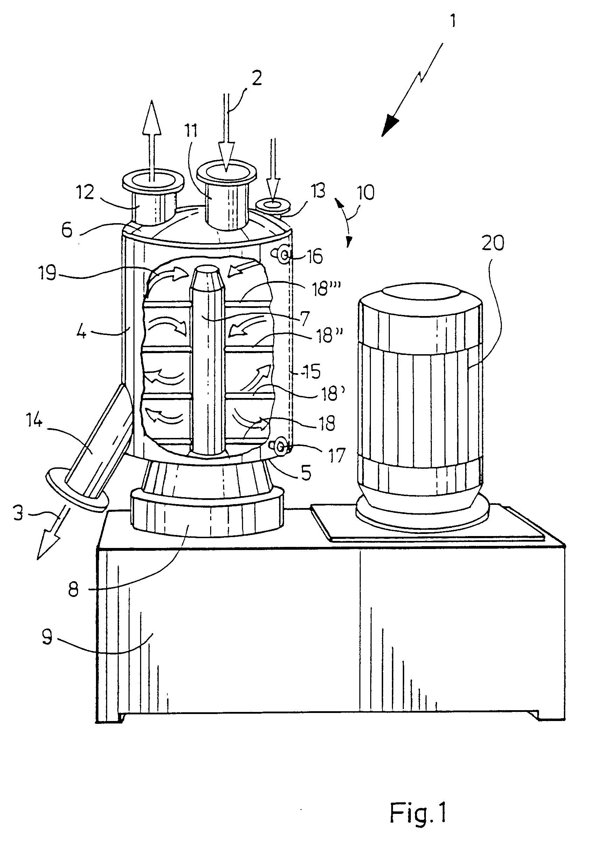

Figur 1 zeigt mit 1 einen Misch-Recycler, der in Pfeilrichtung 2 mit dem zu verarbeitenden Gut beschickt wird. In Pfeilrichtung 3 verläßt das aufbereitete Gut den Misch-Recycler. Dabei wurde im Durchlauf durch den Misch-Recycler 1 das in Pfeilrichtung 2 eindosierte Gut zerteilt und soweit verdichtet, daß es beim Ausströmen aus dem Misch-Recycler 1 in Pfeilrichtung 3 ein sehr stark erhöhtes Schüttgewicht gegenüber dem in Pfeilrichtung 2 einströmenden Gut aufweist.

Mit 4 ist ein Behälter des Misch-Recyclers gezeigt, der einen Boden 5 und einen Deckel 6 aufweist. Innerhalb des Behälters 4 ist vertikal ausgerichtet eine Welle 7 gelagert, die ein Lager 8 im Bodenbereich durchdringt. Das Lager 8 ist einerseits am Behälter 4 und andererseits am Maschinengestell 9 angeflanscht.

Der Deckel 6 ist in Pfeilrichtungen 10 verschwenkbar. Der Deckel 6 ist am Behälter 4 gas- und produktdicht verschließbar. Am Deckel 6 selbst ist ein Produkteintragstutzen 11, ein Gasaustragstutzen 12 und ein Flüssigkeitszugabestutzen 13 vorgesehen. Im Bereich des Bodens 5 ist ein Produktaustragsstutzen 14 ausgebildet. Der Behälter 4 ist in Fig. 1 mit einer Ummantelung 15 versehen, die in Verbindung mit Stutzen 16, 17 steht. Über den Stutzen 17 kann beispielsweise ein Fluid in die Ummantelung einströmen, und aus dem Stutzen 16 strömt das Fluid wieder aus der Ummantelung heraus. Bei Bedarf kann die Strömungsrichtung des Fluids auch umgekehrt sein.

Im Behälter 4 sind auf der Welle 7 Mischwerkzeuge 18, 18', 18'', 18''' vorgesehen. Die Anzahl der übereinander gestaffelten Mischwerkzeuge 18 ist für eine erfindungsgemäße Vorrichtung beispielhaft zu verstehen. Die Mischwerkzeuge 18, 18', 18'', 18''' erzeugen bei Rotation um die Welle 7 eine Materialtrombe. Je nachdem wie die Mischwerkzeuge 18, 18', 18'', 18''' ausgeformt sind und in welcher Anzahl sie auf der Welle 7 angeordnet sind, ergibt sich in Abhängigkeit von der Mischwerkzeugdrehzahl eine unterschiedliche Materialtrombe. Das im Behälter 4 zu bearbeitende Gut wird bei Rotation der Mischwerkzeuge 18, 18', 18'', 18''' in Pfeilrichtung 19 zwangsbewegt.

Die Welle 7 ragt durch das Lager 8 hindurch in das Maschinengestell 9, in dem Übertragungsmittel, wie ein Getriebe, vorgesehen sind. Die Übertragungsmittel übertragen die Energie eines Motors 20 auf die Welle 7, so daß diese mit unterschiedlichsten Drehzahlen, auch stufenlos regelbar, angetrieben werden kann. Über den Motor 20 können beispielsweise Betriebsparameter kontinuierlich abgegriffen werden, die ein Maß für die Dosiereinheit des Guts pro Zeiteinheit und ein Maß für die Abzugsmenge des bearbeiteten Guts pro Zeiteinheit sein können. Geeignete Steuer- und Regelmittel übernehmen die Optimierung des Verfahrens.

Das in der Vorrichtung zu verarbeitende Gut durchläuft den Misch-Recycler 1 aus Pfeilrichtung 2 kommend und verläßt den Misch-Recycler 1 in Richtung Pfeilrichtung 3. Innerhalb des Behälters 2 wird das Gut innerhalb einer Materialtrombe kontinuierlich verarbeitet, und sobald die gewünschte Schüttgewichtserhöhung stattgefunden hat, werden diese bearbeiteten Gutteile aus dem Behälter 4 abgezogen. Die Mischwerkzeuge 18, 18', 18'', 18''' drehen sich mit einer Froudezahl > 6, die wie folgt definiert ist:

$$FR = \frac{m \cdot \omega^2 \cdot r}{m \cdot g}$$

Dabei handelt es sich bei m um die Masse der Schüttgutpartikel, r ist der Radius der Trommel, g die Erdbeschleunigung mit der Gleichung G =

$r \cdot n_c^2 \cdot 4 \, \pi^2$ und $\omega$ ist als Winkelgeschwindigkeit der Mischwerkzeuge und $n_c$ als kritische Drehzahl definiert.

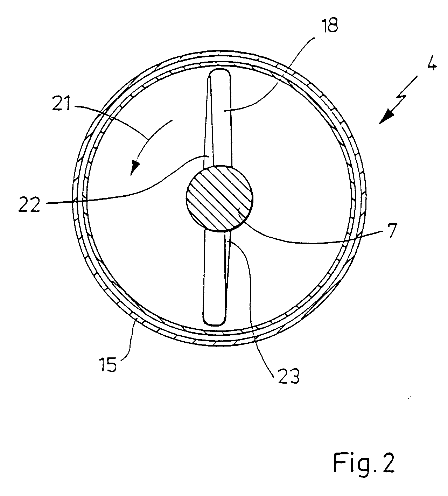

Fig. 2 zeigt eine erfindungsgemäße Vorrichtung im Schnitt und zeigt beispielhaft ein Mischwerkzeug 18 in Draufsicht. Die Welle 7 ist entsprechend geschnitten. Das Mischwerkzeug 18 ist schwertartig ausgebildet und weist Abschrägungen 22, 23 auf. Das Mischwerkzeug 18 erstreckt sich weitgehend über den gesamten Durchmesser des Behälters 4. Das Mischwerkzeug 18 ist nur geringfügig von der Mischbehälterinnenwand beabstandet. Der Behälter 4 ist mit einer Ummantelung 15 versehen, über die der Behälter 4 erwärm- bzw. kühlbar ist. Das Mischwerkzeug 18 dreht sich im Betrieb in Pfeilrichtung 21. Innerhalb des Behälters 4 können mehrere Mischwerkzeuge 18 übereinander gestaffelt angeordnet sein. Dabei können die Formen der unterschiedlichen Mischwerkzeuge unterschiedlich sein.

Altteile bzw. Abfälle aus Kunststoff, insbesondere aus aufgeschäumtem Polystyrol, werden in einem Wiederaufbereitungsverfahren in einer Vorrichtung gleichzeitig gezielt unter Friktion, Scherkräften und Temperatureinwirkung zerkleinert und verdichtet sowie temperiert und/oder getrocknet und/oder entgast. Das in der Vorrichtung (1), einem Misch-Recycler, behandelte Gut verläßt als stark kompaktiertes rieselfähiges Granulat die Vorrichtung und das behandelte Gut weist ein mehrfach erhöhtes Schüttgewicht gegenüber dem unbehandelten Ausgangsprodukt auf. Das rieselfähig kompaktierte Granulat ist für die Weiterverarbeitung gut geeignet, weil es unter geringer thermischer Belastung hergestellt wurde.

**Patentansprüche**

1. Recycling-Verfahren für Altteile bzw. Abfälle aus Kunststoff, insbesondere aus aufgeschäumtem Polystyrol, mittels mechanischem Zerkleinern und thermischer Beanspruchung, wobei die Verfahrensstufen zusammengefaßt durch gezielte Einwirkung von Friktion, Scherkräften und Temperatur auf das Gut in einer Vorrichtung erfolgen und das zu behandelnde Gut durch Werkzeuge zerteilt, verdichtet, temperiert und/oder entgast, untereinander zu einem homogenen rieselfähigen Granulat verarbeitet wird, dadurch gekennzeichnet, daß die Mischwerkzeuge im Froudezahlbereich FR > 6 arbeiten, daß das Gut auf Temperaturen zwischen 100°C und 140°C erwärmt wird und daß das Schüttgewicht des erhaltenen Guts mehrfach höher als das Schüttgewicht der Abfälle ist.

**2.** Recycling-Verfahren nach Anspruch 1, dadurch gekennzeichnet, daß die Mischvorrichtung kontinuierlich betrieben wird.

**3.** Recycling-Verfahren nach Anspruch 1 oder 2, dadurch gekennzeichnet, daß das Gut in der Mischvorrichtung zu einem Granulat mit einer Korngrößenverteilung von 0,2 bis 3 mm aufbereitet wird.

**4.** Recycling-Verfahren nach einem der Ansprüche 1 bis 3, dadurch gekennzeichnet, daß als zu behandelndes Gut aufgeschäumtes Polystyrol mit einem Schüttgewicht von ca. 20 Gramm pro Liter verwendet wird und das Granulat die Mischvorrichtung mit einem Schüttgewicht bis ca. 250 Gramm pro Liter verläßt.

**5.** Recycling-Verfahren nach einem der Ansprüche 1 bis 4, dadurch gekennzeichnet, daß bei der Behandlung des Guts Gas freigesetzt wird, das zur Weiterverarbeitung aufgefangen bzw. verflüssigt wird.

**6.** Recycling-Verfahren nach einem der Ansprüche 1 bis 5, dadurch gekennzeichnet, daß der Mischvorrichtung neben dem Gut eine Flüssigkeit mit einer Siedetemperatur von T > 100°C zugeführt wird, wobei das bearbeitete Gut von der Flüssigkeit zumindest teilweise gebunden wird.

**7.** Vorrichtung zur Durchführung eines Verfahrens nach einem der Ansprüche 1 bis 6, dadurch gekennzeichnet, daß die Vorrichtung einen Behälter (4) mit Boden (5) und Deckel (6) aufweist, in der ein Bearbeitungswerkzeug, bestehend aus einer Welle (7) und Mischwerkzeugen (18, 18', 18'', 18''') antreibbar gelagert ist, und daß der Behälter (4) mit Produktein- und Produktaustragsstutzen (11, 14) versehen ist.

**8.** Vorrichtung nach Anspruch 7, dadurch gekennzeichnet, daß der Behälter (4) beheizbar und/oder kühlbar ist.

**9.** Vorrichtung nach einem der Ansprüche 7 oder 8, dadurch gekennzeichnet, daß an dem Behälter (4) ein oder mehrere Entgasungsstutzen (12) vorgesehen sind.

**10.** Vorrichtung nach einem der Ansprüche 7 bis 9, dadurch gekennzeichnet, daß die Vorrichtung mindestens einen Flüssigkeitszugabestutzen (13) aufweist.

**11.** Vorrichtung nach einem der Ansprüche 7 bis 10, dadurch gekennzeichnet, daß an den Produktaustragsstutzen (14) eine Schnecke bzw. Pumpe anflanschbar ist.

**12.** Vorrichtung nach einem der Ansprüche 7 bis 11, dadurch gekennzeichnet, daß die Vorrichtung Mittel zur Steuerung und Regelung des Produkt- und/oder Flüssigkeitseintrags und des Produktaustrags aufweist.

Fig.1

Fig. 2

Europäisches
Patentamt

**EUROPÄISCHER RECHERCHENBERICHT**

Nummer der Anmeldung
EP 94 11 5083

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG |
|---|---|---|---|
| Y | DE-A-41 32 906 (GEBRÜDER LÖDIGE MASCHINENBAU-GMBH UND BABCOCK-BSH AG) * das ganze Dokument * --- | 1-7,9,10 | B29B17/00 B29B13/10 B29B13/02 B02C18/44 //B29K25:00, B29K105:04 |
| P,Y | PATENT ABSTRACTS OF JAPAN vol. 18, no. 37 (M-1545) 20. Januar 1994 & JP-A-05 269 740 (SEKISUI PLASTICS CO. LTD. ET AL.) 19. Oktober 1993 * Zusammenfassung * & DATABASE WPI Section Ch, Week 9346, Derwent Publications Ltd., London, GB; Class ACS, AN 93-364618 C46! & JP-A-5 269 740 (MEINOU K.K. UND SEKISUI PLASTICS CO. LTD.) 19. Oktober 1993 * Zusammenfassung * --- | 1-7,9,10 | |
| A | DATABASE WPI Section Ch, Week 8044, Derwent Publications Ltd., London, GB; Class AS, AN 80-77995C C44! & JP-A-55 121 026 (NAGATA K.) 18. September 1980 * Zusammenfassung * --- | 1,4,6,8,12 | |
| A | DE-A-41 28 046 (ALPIRSBACHER MASCHINENBAU GMBH & CO. K.G.) * Ansprüche 1-10; Abbildungen 3-5 * ----- | 1,2,8,11 | |

**RECHERCHIERTE SACHGEBIETE (Int.Cl.6)**

B29B
B02C
C08J

Der vorliegende Recherchenbericht wurde für alle Patentansprüche erstellt

| Recherchenort | Abschlußdatum der Recherche | Prüfer |
|---|---|---|
| DEN HAAG | 17. Januar 1995 | Molto Pinol, F |

EPO FORM 1503 03.82 (P04C03)